# EUROPEAN PATENT APPLICATION

(11) **EP 4 037 006 A2**
(43) Date of publication of application: **03.08.2022**
(21) Application number: 21215602.0
(22) Date of filing: 17.12.2021
(51) Int. Cl.: H01M 4/04, H01M 4/131, H01M 4/133, H01M 4/1391, H01M 4/1393, H01M 4/525, H01M 4/587, H01M 4/62, H01M 10/0525, H01M 4/02

(54) **ELECTRODE MATERIAL COMPRISING MOISTURE POWDER, ELECTRODE, METHOD FOR PRODUCING SAME, AND SECONDARY BATTERY PROVIDED WITH SAID ELECTRODE**

(30) Priority: 27.01.2021 JP 2021011041; 26.02.2021 JP 2021029502
(71) Applicant: Prime Planet Energy & Solutions, Inc., Chuo-ku Tokyo 103-0022 (JP)
(72) Inventor: ENOKIHARA, Katsushi, Tokyo, 103-0022 (JP); MASHIMO, Naohiro, Tokyo, 103-0022 (JP); SHIONOYA, Haruka, Tokyo, 103-0022 (JP); KITAYOSHI, Masanori, Tokyo, 103-0022 (JP)
(74) Representative: Kuhnen & Wacker Patent- und Rechtsanwaltsbüro PartG mbB

(57) **Abstract**

Provided by the present disclosure is an electrode material (mixture) which exhibits good spreadability and in which the surface area of an electrode active material layer at the stage of a coating film prior to drying can be easily increased by press molding. A moisture powder for forming an electrode active material layer on an electrode current collector of a positive electrode or negative electrode disclosed here is constituted from aggregated particles that contain a plurality of electrode active material particles, a binder resin and a solvent, wherein
at least 50% by number or more of the aggregated particles that constitute the moisture powder have the following properties:
(1) a solid phase, a liquid phase and a gas phase form a pendular state or a funicular state; and
(2) a layer of the solvent is not observed at the outer surface of an aggregated particle in electron microscope observations.

## Description

### BACKGROUND

### 1. Technical Field

The present disclosure relates to an electrode of a secondary battery, a method for producing same, and a secondary battery provided with said electrode. More specifically, the present disclosure relates to a method for producing a secondary battery electrode produced using a moisture powder having a controlled gas phase.

### 2. Description of the Background

Secondary batteries such as lithium ion secondary batteries are lightweight and can achieve high energy densities, and can therefore be advantageously used as high output power sources for powering vehicles such as battery electric vehicles and hybrid electric vehicles, and demand for such secondary batteries is expected to increase in the future.

Examples of typical structures of positive electrodes and negative electrodes provided in this type of secondary battery (hereinafter, the term "electrode" is used in cases where no particular distinction is made between a positive electrode and a negative electrode) include structures in which an electrode active material layer comprising mainly an electrode active material is formed on one surface or both surfaces of a foil-like electrode current collector.

This type of electrode active material layer is formed by coating a surface of a current collector with a slurry-like (paste-like) electrode mixture (hereinafter referred to as a "mixture slurry") prepared by dispersing solid components such as an electrode active material, a binder and an electrically conductive material in a prescribed solvent, thereby forming a coating film, drying the coating film, and then applying pressure so as to achieve a prescribed density and thickness.

Instead of forming a film using this type of mixture slurry, consideration has also been given to Moisture Powder Sheeting (MPS) formed by using a so-called moisture powder, which has a higher proportion of solid components than a mixture slurry, and in which aggregates are formed in such a way that a solvent is held on active material particle surfaces and binder molecule surfaces. For example, Japanese Patent Application Publication No. 2020-136016, Japanese Patent Application Publication No. 2019-057383, Japanese Patent Application Publication No. 2018-137087, Japanese Patent Application Publication No. 2018-037198 below disclose methods for producing electrodes for lithium ion secondary batteries, the methods being characterized by forming an active material layer from a moisture powder.

### SUMMARY

Secondary batteries used as high output power sources for driving vehicles require even higher performance. For example, there have been demands for lower internal resistance in batteries, improvements in high rate charging and discharging, and the like. In this respect, if it is possible to make the surface area of an electrode active material layer formed on a surface of an electrode current collector greater than that in the prior art, this may be one approach to fulfill the requirements mentioned above.

However, in cases where films were formed using conventional mixture slurries, it was difficult to increase the surface area of electrode active material layers. That is, because the solvent content is high in a coating film comprising a slurry, a leveling effect caused by surface tension following coating film formation is strong, and it is not possible to form unevenness that increases the surface area of an electrode active material layer on a surface of the electrode active material layer (coating film). Of course, it is possible to mechanically press the surface of the electrode active material layer after drying the coating film, but because spreadability during pressing is poor after drying, it is difficult to repeatedly and precisely form unevenness having a prescribed depth at a prescribed interval (pitch). Furthermore, a surface layer on which unevenness has been formed by pressing becomes partially compacted, and this is not desirable from the perspective of forming efficient electrically conductive paths across an entire active material layer.

Meanwhile, in film formation using conventional moisture powders (MPS), it was difficult to adequately increase the surface area of electrode active material layers. That is, conventional moisture powders are in a so-called "capillary state" described later, in which a liquid phase is formed continuously across an entire powder, a solvent is present at a relatively large quantity at the surface of a coating film comprising the moisture powder, and it is difficult to form unevenness that increases the surface area of an electrode active material layer.

In addition, a case where the surface of an electrode active material layer is mechanically pressed after drying a coating film is similar to a case mentioned above in which a film is formed using a mixture slurry, and because spreadability is poor, it is difficult to precisely form unevenness having a required depth.

In view of the circumstances mentioned above, the purpose of the present disclosure is to provide an electrode material (mixture) that enables the surface area of an electrode active material layer to be easily increased with good spreadability at a stage before a coating film is dried; and to provide a secondary battery electrode that realizes an increase in surface area by using this electrode material; and a method for producing same.

In order to achieve the objectives mentioned above, the inventors of the present disclosure investigated details of MPS and properties of moisture powders used in the past in said MPS. In conventional moisture powders, the content of solid components is higher than in mixture slurries (pastes), but attention has been focused on the matter that the manner in which solvents and solid components of aggregated particles that constitute the powder are present is a relatively capillary-like state, that is, that a relatively large amount of solvent is held inside aggregated particles that constitute the moisture powder, and a layer of solvent is also formed at surfaces of aggregated particles. Furthermore, attention has also been focused on the matter that no consideration has been given to the manner in which a gas phase, that is, voids, are present in the aggregated particles.

Unlike in conventional moisture powders, the inventors of the present disclosure found that the manner in which solid components (a solid phase), a solvent (a liquid phase) and voids (a gas phase) are present is a pendular state described later or a funicular state (a funicular I state) that is similar to a pendular state, in other words, found that in aggregated particles that constitute the powder, an appropriate amount of solvent (liquid phase), which is not too large or too small to bridge electrode active material particles that form the aggregated particles, is present, voids connected to the outside are formed inside aggregated particles, and a solvent layer is substantially not formed at surfaces of the aggregated particles, thereby enabling a prescribed unevenness to be formed by means of press molding or the like on an undried coating film formed on a current collector, and enabling the surface area of an electrode active material layer to be easily increased, and thereby completed the present disclosure.

That is, a moisture powder for forming an electrode active material layer on an electrode current collector of either a positive electrode or negative electrode disclosed here is a moisture powder constituted from aggregated particles that contain a plurality of electrode active material particles, a binder resin and a solvent.

In addition, the moisture powder disclosed here is characterized in that at least 50% by number or more (more preferably 70% by number or more, and particularly preferably 80% by number or more) of the aggregated particles that constitute the powder have the following properties:
(1) a solid phase, a liquid phase and a gas phase form a pendular state or a funicular state; and
(2) a layer of the solvent is not observed at the outer surface of the aggregated particle in electron microscope observations.

As mentioned above, a moisture powder comprising aggregated particles in this type of pendular or funicular state maintains a state in which a solvent (liquid phase) bridges between electrode active material particles and between electrode active material particles and a binder resin while a gas phase is controlled in such a way that voids (connecting pores) connected to the outside are formed inside aggregated particles.

Therefore, if an undried coating film is formed on a current collector using the moisture powder disclosed here, it is possible to form a prescribed uneven structure on the surface of the coating film by means of press molding or the like and it is also possible to easily increase the surface area per unit area of an electrode active material layer.

In addition, due to the presence of solvent liquid bridging, it is possible to prevent surface layer portions of the electrode active material layer from becoming partially compacted even in cases where the electrode active material layer is compressed to a prescribed thickness after being dried. In addition, due to the presence of connecting pores, a solvent does not come into contact with a surface of a processing tool at the time of press molding or the like, the connecting pores function as vent holes when a coating film is released, and release is enabled.

In addition, unlike a coating film comprising a slurry or a moisture powder in a capillary state, free movement of a solvent in a coating film formed on an electrode current collector is restricted, and it is therefore possible to prevent uneven distribution of a binder resin in a coating film in a drying process.

In a preferred aspect of the moisture powder for forming an electrode active material layer disclosed here,
if the bulk specific gravity measured by placing an amount (g) of the moisture powder in a container having a prescribed volume (mL) and then leveling the moisture powder without applying a force is referred to as the loose bulk specific gravity X (g/mL), and
the specific gravity calculated from the composition of the moisture powder on the assumption that no gas phase is present is referred to as the true specific gravity Y (g/mL), then the ratio of the loose bulk specific gravity X and the true specific gravity Y (Y/X) is 1.2 or more.

In a more preferred aspect of the moisture powder, when a coating film having a thickness of 300 µm or more to 1000 µm or less is formed from the moisture powder on the electrode current collector and then pressed at a pressure of 60 MPa, the residual gas rate in the coating film (that is, (volume of air/volume of coating film) × 100) after the coating film is pressed is 10 vol% or less.

In a more preferred aspect of the moisture powder, in a void distribution of the pressed coating film based on void observations determined using a Synchrotron X-Ray laminography method, the ratio of voids having volumes of 2000 µm³ or more relative to the total void volume (100 vol%) is 30 vol% or less.

In the case of a moisture powder able to exhibit these characteristics, it is possible to better form electrically conductive paths and charge carrier (for example, lithium ion) paths and form an electrode active material layer having excellent void paths.

In addition, in order to achieve the objectives mentioned above, the electrode that is either a positive or negative electrode of a secondary battery disclosed here comprises an electrode current collector and an electrode active material layer formed on the current collector. In addition, said battery is characterized in that when the surface area of a reference area of the electrode active material layer indicated by L cm × B cm (L and B are integers of 3 or higher) is measured at n (n is an integer of 5 or higher) different points, the average surface area is 1.05 × L × B cm² or more.

According to the moisture powder disclosed here, it is possible to realize an increase in the surface area of the electrode active material layer, such as 1.05 × L × B cm² or more.

In a preferred aspect of the secondary battery electrode disclosed here, the residual gas rate in the electrode active material layer (that is, (volume of air/volume of coating film) × 100) is 10 vol% or less.

In a more preferred aspect of the secondary battery electrode, in a void distribution of the pressed coating film based on void observations of the electrode active material layer determined using a Synchrotron X-Ray laminography method, the ratio of voids having volumes of 2000 µm³ or more relative to the total void volume (100 vol%) is 30 vol% or less.

An electrode having these characteristics can realize an electrode active material layer having superior electrically conductive paths and can contribute to an improvement in the performance of a secondary battery used as a power source for vehicle propulsion in particular.

In a more preferred aspect of the secondary battery electrode, if the electrode active material layer is divided equally into an upper layer and a lower layer in the thickness direction from the surface of the active material layer towards the current collector, and the concentration values (mg/L) of the binder resin in the upper layer and lower layer are denoted by C1 and C2 respectively,
the relationship 0.8 ≤ (C1/C2) ≤ 1.2 is satisfied.

By forming an electrode active material layer using the moisture powder disclosed here, it is possible to suppress uneven distribution of a binder resin in a drying process, and it is therefore possible to form an electrode active material layer having a uniform composition across the entire layer.

In addition, provided as another aspect of the present disclosure for achieving the objectives mentioned above is a method for producing an electrode which is either a positive electrode or a negative electrode and which has an electrode current collector and an electrode active material layer.

That is, the electrode production method disclosed here includes the following steps:
a step for preparing a moisture powder,
the moisture powder being constituted from aggregated particles that contain a plurality of electrode active material particles, a binder resin and a solvent, wherein at least 50% by number or more of the aggregated particles that constitute the moisture powder have the following properties:
   (1) A solid phase, a liquid phase and a gas phase form a pendular state or a funicular state; and
   (2) A layer of the solvent is not observed at the outer surface of the aggregated particle in electron microscope observations,
a step for coating the moisture powder on the current collector so as to form a coating film comprising the moisture powder; and
a step for subjecting the surface of the coating film to an unevenness-forming treatment so as to form an electrode active material layer on the surface of which is formed unevenness having a prescribed pattern.

According to an electrode production method having such features, it is possible to provide a preferred secondary battery electrode having the characteristics mentioned above.

In a preferred aspect of the electrode production method disclosed here, the unevenness-forming treatment is carried out in such a way as to form an uneven surface in which, when the surface area of a reference area of the electrode active material layer indicated by L cm × B cm (L and B are integers of 3 or higher) is measured at n (n is an integer of 5 or higher) different points, the average surface area is 1.05 × L × B cm² or more.

According to a preferred embodiment of the electrode production method disclosed here, it is possible to provide a secondary battery electrode in which an increase in the surface area of an electrode active material layer, such as 1.05 × L × B cm² or more, is realized.

In a preferred aspect of the electrode production method disclosed here, the coating film formation step is carried out by
supplying the moisture powder between a pair of rotating rollers so as to form a coating film comprising the moisture powder on the surface of one of the rollers, and
transferring the coating film to the surface of the current collector which has been transported on the other rotating roller.

In a coating film comprising the moisture powder disclosed here, the manner in which aggregated particles that constitute the powder are present is such that:
(1) A solid phase, a liquid phase and a gas phase form a pendular state or a funicular state; and
(2) A layer of the solvent is not observed at the outer surface of the aggregated particle in electron microscope observations, and the coating film therefore exhibits excellent spreadability. Due to this configuration, an electrode active material layer having a preferred form can be formed using so-called roll-to-roll film formation.

Therefore, an example of a preferred aspect is one in which the unevenness-forming treatment is carried out by pressing a rotating roller having a prescribed uneven pattern formed on the surface thereof against the surface of the coating film on the current collector.

Also provided by the present disclosure is a secondary battery having a positive electrode and a negative electrode, in which an electrode of any of the aspects disclosed here is provided as an electrode that is the positive electrode and/or the negative electrode.

### BRIEF DESCRIPTION OF THE DRAWINGS

FIGS. 1A to 1D are explanatory diagrams that schematically illustrate states in which a solid phase (solids such as active material particles), a liquid phase (a solvent) and a gas phase (voids) are present in an aggregated particle that constitutes the moisture powder, with
FIG. 1A showing a pendular state, FIG. 1B showing a funicular state, FIG. 1C showing a capillary state, and FIG. 1D showing a slurry-like state;
FIG. 2 is an explanatory diagram that schematically illustrates an example of a stirring granulator used for producing the moisture powder disclosed here;
FIG. 3 is a flow chart that shows the general process of an electrode production method according to one embodiment;
FIG. 4 is an explanatory diagram that schematically illustrates the configuration of a roll-to-roll film formation apparatus according to one embodiment;
FIG. 5 is a block diagram that schematically illustrates the configuration of an electrode production apparatus having a roll-to-roll film formation unit according to one embodiment;

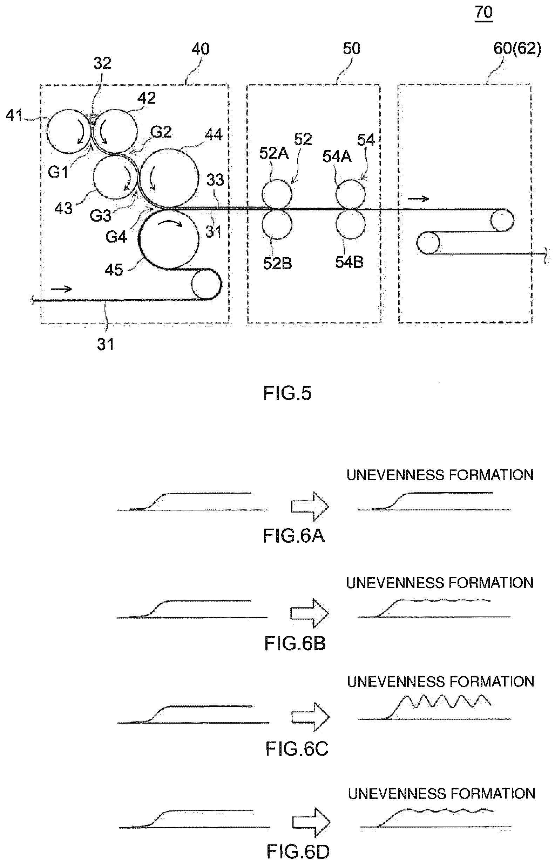

FIGS. 6A to 6D are explanatory diagrams that schematically illustrate that the shape of unevenness able to be formed on a surface of a coating film (electrode active material layer) differs according to the material used and the state of the material, with FIG. 6A showing a case in which a coating film is formed from a mixture slurry (a paste), FIG. 6B showing a case in which a coating film is formed from a conventional moisture powder, FIG. 6C showing a case in which a coating film is formed from the moisture powder disclosed here, and FIG. 6D showing a case of an electrode active material layer after drying a coating film formed from a mixture slurry (a paste);
FIG. 7A is a surface SEM image that illustrates the structure of a negative electrode active material layer (before pressing) formed using a conventional solvent-rich moisture powder;
FIG. 7B is a cross section SEM image that illustrates the structure of a negative electrode active material layer (before pressing) formed using a conventional solvent-rich moisture powder;
FIG. 8A is a surface SEM image that illustrates the structure of a negative electrode active material layer (before pressing) formed using the gas phase-controlled moisture powder disclosed here;
FIG. 8B is a cross section SEM image that illustrates the structure of a negative electrode active material layer (before pressing) formed using the gas phase-controlled moisture powder disclosed here;

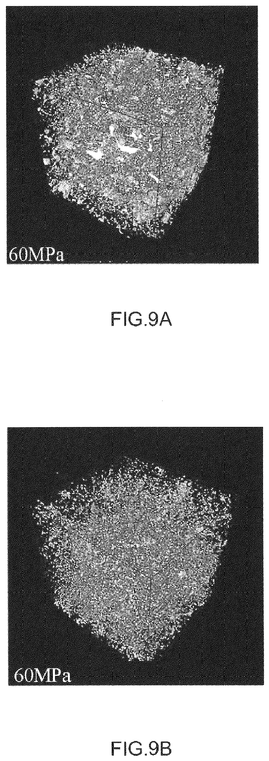

FIG. 9A is a three-dimensional image that shows the void structure, as observed using a Synchrotron X-Ray laminography method, of a negative electrode active material layer formed using a conventional solvent-rich moisture powder (a negative electrode active material layer after being pressed at 60 MPa but before being dried);
FIG. 9B is a three-dimensional image that shows the void structure, as observed using a Synchrotron X-Ray laminography method, of a negative electrode active material layer formed using the gas phase-controlled moisture powder disclosed here (a negative electrode active material layer after being pressed at 60 MPa but before being dried);
FIG. 10A is a graph that shows the void volume distribution, as calculated using three-dimensional image analysis, of the void structure, as observed using a Synchrotron X-Ray laminography method, of a negative electrode active material layer formed using a conventional solvent-rich moisture powder (a negative electrode active material layer after being pressed at 60 MPa but before being dried), and the horizontal axis shows void volume (µm³) and the vertical axis shows volume fraction;
FIG. 10B is a graph that shows the void volume distribution, as calculated using three-dimensional image analysis, of the void structure, as observed using a Synchrotron X-Ray laminography method, of a negative electrode active material layer formed using the gas phase-controlled moisture powder disclosed here (a negative electrode active material layer after being pressed at 60 MPa but before being dried), and the horizontal axis shows void volume (µm³) and the vertical axis shows volume fraction;
FIG. 11 is a cross section SEM-EDX image of a positive electrode active material layer, as obtained using F mapping that shows the distribution of a binder resin (PVDF) present in a positive electrode active material layer formed using the gas phase-controlled moisture powder disclosed here; and
FIG. 12 is an explanatory diagram that schematically illustrates a lithium ion secondary battery according to one embodiment.

### DETAILED DESCRIPTION

Using an electrode advantageously used in a lithium ion secondary battery, which is a typical example of a secondary battery, as an example, detailed explanations will now be given of the moisture powder disclosed here and a film formation process (MPS) that uses the moisture powder.

Matters other than those explicitly mentioned in the present specification but which are essential for carrying out the invention are matters that a person skilled in the art could understand to be matters of design on the basis of the prior art in this technical field. Details of features disclosed here can be implemented on the basis of the matters disclosed in the present specification and common general technical knowledge in this technical field.

Moreover, cases where numerical ranges in the present specification are written as A to B (here, A and B are arbitrary numbers) mean the same as in ordinary interpretations and mean not less than A and not more than B (including more than A and less than B).

In the present specification, the term "lithium ion secondary battery" means a secondary battery in which movement of charge is borne by lithium ions in an electrolyte. In addition, the term "electrolyte body" means a structure that serves as a primary component of a battery constituted from a positive electrode and a negative electrode. In the present specification, the term "electrode" is used if there is no need to make a particular distinction between a positive electrode and a negative electrode. The term "electrode active material" (that is, positive electrode active material or negative electrode active material) means a compound capable of reversibly storing and releasing chemical species that serve as charge carriers (lithium ions in the case of a lithium ion secondary battery).

In addition, morphological classifications of moisture powders are described in "Particle Size Enlargement" by Capes C. E. (published by Elsevier Scientific Publishing Company, 1980), and four classifications that are currently known are used in the present specification to clearly define the moisture powder disclosed here. More specifically, these four classifications are as follows.

The manner in which solid components (a solid phase), a solvent (a liquid phase) and voids (a gas phase) are present in aggregated particles that constitute the moisture powder can be classified into four types, namely "a pendular state", "a funicular state", "a capillary state" and "a slurry state".

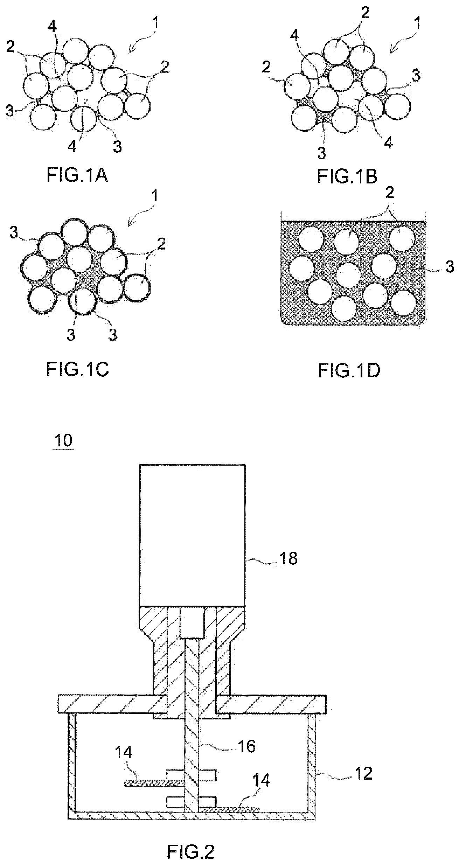

Here, "pendular state" means a state in which a solvent (a liquid phase) 3 is present in a discontinuous manner between active material particles (solid phases) 2 in an aggregated particle 1, as shown in FIG. 1A, and active material particles (solid phases) 2 can be present in an interlinked (connected) manner. As shown in the figure, the content of the solvent 3 is relatively low, meaning that many voids (gas phases) 4 present in the aggregated particle 1 are present in a connected form and form continuous pores connected to the outside. In addition, an example of a pendular state is one characterized in that a connected layer of solvent is not observed across the entire outer surface of the aggregated particle 1 in electron microscope observations (SEM observations).

In addition, a "funicular state" means a state in which the solvent content in the aggregated particle 1 is higher than in a pendular state and a solvent (a liquid phase) 3 is present in a continuous manner around the periphery of active material particles (solid phases) 2 in the aggregated particle 1, as shown in FIG. 1B. However, because the amount of solvent is still low, active material particles (solid phases) 2 are present in an interlinked (connected) manner, in the same way as in a pendular state. Meanwhile, the ratio of continuous pores connected to the outside is somewhat low relative to the total amount of voids (gas phases) 4 present in the aggregated particle 1, and the ratio of discontinuous isolated voids tends to increase, but the presence of continuous pores can be confirmed.

A funicular state falls between a pendular state and a capillary state, and if funicular states are classified into a funicular I state, which is closer to a pendular state (that is, a state in which the amount of solvent is relatively low), and a funicular II state, which is closer to a capillary state (that is, a state in which the amount of solvent is relatively high), a funicular I state encompasses a state in which a connected layer of solvent is not observed at the outer surface of the aggregated particle 1 in electron microscope observations (SEM observations).

A "capillary state" is a state in which the solvent content in an aggregated particle 1 increases, the amount of solvent in the aggregated particle 1 approaches a saturated state, and a sufficient amount of solvent 3 is present in a continuous manner at the periphery of active material particles 2, meaning that the active material particles 2 are present in a discontinuous manner, as shown in FIG. 1C. Almost all voids (gas phases) present in the aggregated particle 1 (for example, 80 vol% of the total void volume) are present as isolated voids due to the increase in the amount of solvent, and the ratio of voids in the aggregated particle decreases.

A "slurry state" is one in which active material particles 2 are suspended in a solvent 3, as shown in FIG. 1D, and is a state that cannot be called aggregated particles. Gas phases are essentially absent.

The moisture powder disclosed here is (1) a moisture powder that forms the pendular state and funicular state described above (and especially the funicular I state). The moisture powder disclosed here preferably has the morphological characteristic that (2) a layer comprising the solvent is not observed across the entire outer surface of the aggregated particle 1 in electron microscope observations (SEM observations).

Hereinafter, a moisture powder that satisfies requirements (1) and (2) disclosed here is referred to as a "gas phase-controlled moisture powder".

A gas phase-controlled moisture powder can be produced using a process for producing a conventional moisture powder having a capillary state. That is, by adjusting the amount of solvent and the formulation of solid components (active material particles, binder resin, and the like) so that the ratio of a gas phase is higher than in conventional moisture powders and specifically so that many voids (continuous pores) connected to the outside are formed the inner part of an aggregated particle, it is possible to produce a moisture powder as an electrode material (an electrode mixture) encompassed by the pendular state and funicular state described above (and especially a funicular I state).

In addition, in order to achieve liquid bridging between active material particles using the minimum amount of solvent, it is preferable for the surface of a powder material being used to exhibit an appropriate degree of affinity for the solvent being used.

A preferred example of a suitable gas phase-controlled moisture powder disclosed here is one in which a three-phase state observed using electron microscope observations is a pendular state or a funicular state (and especially a funicular I state) and in which "the ratio of the loose bulk specific gravity X and the true specific gravity Y (Y/X)" is 1.2 or more, preferably 1.4 or more (and further preferably 1.6 or more) and is 2 or less, the ratio being calculated from the loose bulk specific gravity X (g/mL), which is measured by placing an obtained moisture powder in a container having a prescribed volume (mL) and then leveling the moisture powder without applying a force, and the raw material-based true specific gravity Y (g/mL), which is the specific gravity calculated from the composition of the moisture powder on the assumption that no gas phase is present.

Materials similar to those used in cases where conventional mixture slurries (pastes) and moisture powders are produced can be used without particular limitation as a material to be used.

A compound having a composition used as a negative electrode active material or positive electrode active material of a conventional secondary battery (a lithium ion secondary battery in this case) can be used as an electrode active material that is a primary component of solid components. For example, carbon materials such as graphite, hard carbon and soft carbon can be given as examples of the negative electrode active material. In addition, examples of the positive electrode active material include lithium-transition metal composite oxides such as LiNi_{1/3}Co_{1/3}Mn_{1/3}O₂, LiNiO₂, LiCoO₂, LiFeO₂, LiMn₂O₄ and LiNi_{0.5}Mn_{1.5}O₄, and lithium-transition metal phosphate compounds such as LiFePO₄. The average particle diameter (D₅₀) of active material particles, as based on a laser diffraction·scattering method, should be approximately 0.1 to 50 µm, and is preferably approximately 1 to 20 µm.

Examples of other solid components include binder resins and electrically conductive materials, in the same way as in cases where a conventional mixture slurry (paste) or moisture powder is produced. Examples of binder resins include poly(vinylidene fluoride) (PVDF), carboxymethyl cellulose (CMC), styrene-butadiene rubbers (SBR), polytetrafluoroethylene (PTFE) and poly(acrylic acid) (PAA). The type of binder resin to be used should be suitable for the type of solvent being used. In addition, preferred examples of electrically conductive materials include carbon materials such as carbon nanotubes and carbon black, such as acetylene black (AB).

In addition, in cases where a moisture powder (electrode mixture) is to be used in an application for forming an electrode of a so-called all solid state battery, a solid electrolyte is used as a solid component. Although not particularly limited, preferred examples thereof include sulfide solid electrolytes containing Li₂S, P₂S₅, Lil, LiCl, LiBr, Li₂O, SiS₂, B₂S₃, ZₘSₙ (here, m and n are positive integers, and Z is Ge, Zn or Ga), Li₁₀GeP₂S₁₂, or the like, as a constituent element.

In addition, a solvent is not particularly limited as long as the solvent can advantageously disperse (dissolve) the binder resin. Preferred examples of the solvent include water, N-methyl-2-pyrrolidone (NMP) and butyl butyrate.

A target moisture powder is produced by carrying out impregnation and granulation using materials such as those described above. For example, a moisture powder (that is, an aggregation of aggregated particles) is produced by mixing materials using a stirring granulator 10 (a mixer such as a planetary mixer) such as that shown in FIG. 2. As shown in the figure, this type of stirring granulator 10 comprises: a mixing vessel 12 that is typically cylindrical in shape; a rotating blade 14 housed within the mixing vessel 12; and a motor 18 that is connected to the rotating blade (also referred to as a blade) 14 via a rotating shaft 16.

In a granulating step, materials other than the solvent (that is, solid components) are first mixed and a solvent-less dry dispersion treatment is carried out. In this way, the solid components form a highly dispersed state. It is preferable to then add the solvent and other liquid components (for example, a liquid binder) to the mixture in the dispersed state and carry out further mixing. In this way, it is possible to produce a moisture powder in which solid components are favorably mixed.

Specifically, an electrode active material and a variety of additives (a binder resin, a thickening agent, an electrically conductive material, and the like), which are solid components, are placed in the mixing vessel 12 of the stirring granulator 10, and the motor 18 is activated so as to rotate the rotating blade 14 at a rotational speed of, for example, 2000 to 5000 rpm for a period of approximately 1 to 60 seconds (for example, 2 to 30 seconds), thereby producing a mixture of the solid components. Next, a suitable quantity of solvent is added to the mixing vessel 12 so that the solid component content is 70% or more, and more preferably 80% or more (for example, 85 to 98%), and a stirring and granulation treatment is carried out. Although not particularly limited, the rotating blade 14 is further rotated at a rotational speed of, for example, 100 to 1000 rpm for a period of approximately 1 to 60 seconds (for example, 2 to 30 seconds). In this way, the materials and the solvent can be mixed in the mixing vessel 12, and moist granules (a moisture powder) can be produced. Moreover, by continuing to stir for a short period of time of approximately 1 to 5 seconds at a rotational speed of approximately 1000 to 3000 rpm, it is possible to prevent aggregation of the moisture powder.

The particle size of the obtained granules can be greater than the width of a gap between a pair of rollers in a roll-to-roll film formation apparatus described later. In cases where the width of this gap is approximately 10 to 100 µm (for example, 20 to 50 µm), the particle size of the granules can be 50 µm or more (for example, 100 to 300 µm).

In the gas phase-controlled moisture powder disclosed here, a solid phase, a liquid phase and a gas phase form a pendular state or a funicular state (and preferably a funicular I state), the solvent content is so low that a layer of solvent is not observed at the outer surface of an aggregated particle in electron microscope observations (for example, the solvent content can be approximately 2 to 15%, or 3 to 8%), and a gas phase part is relatively large.

In order to achieve this type of state, it is possible to adopt a variety of treatments or procedures that enlarge the gas phase in the granule production step mentioned above. For example, during or after stirring and granulation, it is possible to expose granules to an atmosphere of a dry gas (air or an inert gas) heated to a temperature that is 10 to 50°C higher than room temperature so as to evaporate off excess solvent. In addition, in order to facilitate formation of aggregated particles in a pendular or funicular I state in which the amount of solvent is low, it is possible to use compression granulation having a relatively strong compressive action in order to cause adhesion between active material particles or other solid components. For example, it is possible to use a compressive granulator which granulates powdered raw materials in a state whereby the powdered raw materials are supplied between a pair of rollers vertically from above while applying a compressive force between the rollers.

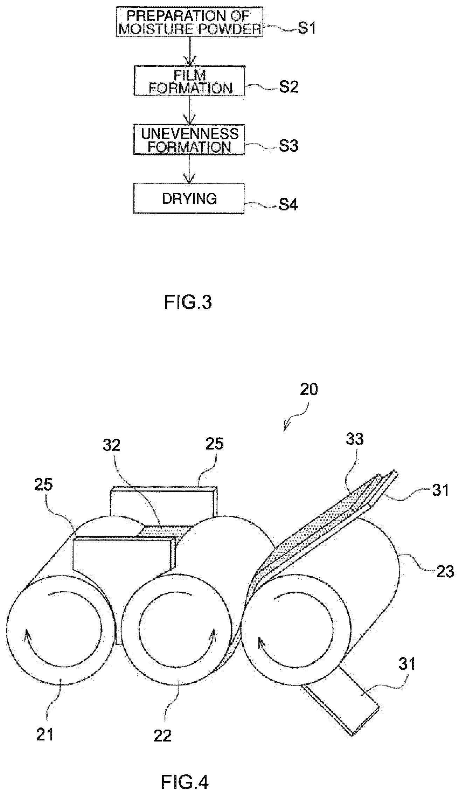

Next, a detailed explanation will be given of a process for producing an electrode by forming a coating film (an electrode active material layer) on a long sheet-shaped electrode current collector using the moisture powder disclosed here. FIG. 3 is a flow chart that shows the general process of an electrode production method.

As shown in FIG. 3, a moisture powder is prepared using the process described above (S1), and the moisture powder is then supplied at a prescribed thickness to an electrode current collector using a suitable film formation apparatus, thereby forming a coating film (S2). Next, an unevenness-forming treatment is carried out so as to form unevenness on a surface of the coating film comprising the moisture powder disclosed here (S3). Next, the surface of the coating film on which an uneven surface has been formed is dried (S4), and an electrode active material layer is formed.

An example of a preferred film formation apparatus for carrying out this film formation is a roll-to-roll film formation apparatus 20 such as that schematically illustrated in FIG. 4. This roll-to-roll film formation apparatus 20 comprises a pair of rotating rollers 21, 22 comprising a first rotating roller 21 (hereinafter referred to as a "supply roller 21") and a second rotating roller 22 (hereinafter referred to as a "transfer roller 22"). The outer peripheral surface of the supply roller 21 faces the outer peripheral surface of the transfer roller 22, and this pair of rotating rollers 21, 22 can rotate in opposite directions, as shown by the arrows in FIG. 4.

The supply roller 21 and the transfer roller 22 are separated only by a distance corresponding to the desired thickness of an electrode mixture layer (coating film) 33 to be formed on a long sheet-shaped electrode current collector 31. That is, a gap having a prescribed width is present between the supply roller 21 and the transfer roller 22, and by controlling the size of this gap, it is possible to control the thickness of the coating film 33 that comprises a moisture powder (electrode mixture) 32 to be adhered to the surface of the transfer roller 22. In addition, by adjusting the size of this gap, it is possible to adjust the force that compresses the moisture powder 32 passing between the supply roller 21 and the transfer roller 22. Therefore, by increasing the size of the gap, it is possible to maintain gas phases in the moisture powder 32 (and specifically gas phases in aggregated particles) produced in a pendular or funicular state.

Dividing walls 25 are provided at the edge parts in the width direction of the supply roller 21 and the transfer roller 22. The dividing walls 25 hold the moisture powder 32 on the supply roller 21 and the transfer roller 22, and the distance between the two dividing walls 25 has the function of defining the width of the coating film (electrode active material layer) 33 to be formed on the electrode current collector 31. The electrode material (moisture powder) 32 is supplied by means of a feeder or the like (not shown) between the two dividing walls 25.

In the film formation apparatus 20 in the present embodiment, a backup roller 23 is disposed as a third rotating roller adjacent to the transfer roller 22. The backup roller 23 has the function of transporting the electrode current collector 31 to the transfer roller 22. The transfer roller 22 and the backup roller 23 rotate in opposite directions, as shown by the arrows in FIG. 4.

Each of the supply roller 21, the transfer roller 22 and the backup roller 23 is connected to an independent driving apparatus (motor), which are not shown, and by causing the speeds of rotation of the supply roller 21, the transfer roller 22 and the backup roller 23 to gradually increase in that order, it is possible to transport the moisture powder 32 to the transfer roller 22 and transfer the moisture powder as the coating film 33 to the surface of the electrode current collector 31 that has been transported by the backup roller 23 from the peripheral surface of the transfer roller 22.

Moreover, in FIG. 4, the supply roller 21, the transfer roller 22 and the backup roller 23 are disposed in such a way that the rotating shafts thereof are horizontally aligned, but these rollers are not limited to this configuration, and the backup roller may be disposed at a position such as that shown in FIG. 5, which is described later (see FIG. 5).

In addition, the sizes of the supply roller 21, the transfer roller 22 and the backup roller 23 are not particularly limited, and maybe similar to sizes used in conventional roll-to-roll film formation apparatuses, and can be, for example, diameters of 50 to 500 mm. The diameters of these three rotating rollers 21, 22, 23 may be the same as, or different from, each other. In addition, the width at which to form a coating film may be similar to that in a conventional roll-to-roll film formation apparatus, and can be decided, as appropriate, according to the width of an electrode current collector on which a coating film is to be formed. In addition, the materials of the peripheral surfaces of these rotating rollers 21, 22, 23 may be the same as materials used in rotating rollers in well-known conventional roll-to-roll film formation apparatuses, examples of which include SUS steel and SUJ steel.

Next, a preferred embodiment of a method for producing a secondary battery electrode using the moisture powder disclosed here will be explained in further detail while referring to the figures. FIG. 5 is an explanatory diagram that schematically illustrates the general configuration of the electrode production apparatus 70 having a roll-to-roll film formation unit according to the present embodiment.

Broadly speaking, an electrode production apparatus 70 according to the present embodiment comprises: a film formation unit 40, in which the coating film 33 is formed by supplying the moisture powder 32 to a surface of the sheet-shaped current collector 31 that has been transported from a supply chamber (not shown); a coating film processing unit 50, in which the coating film 33 is pressed in the thickness direction so as to subject the surface of the coating film to an unevenness-forming treatment; and a drying unit 60, in which the coating film 33 is appropriately dried following the surface unevenness-forming treatment, thereby forming an electrode active material layer.

The film formation unit 40, like the roll-to-roll film formation apparatus described above (see FIG. 4), comprises a supply roller 41, transfer rollers 42, 43, 44 and a backup roller 45, each of which is connected to an independent driving apparatus (motor), which are not shown.

In the film formation unit in the present embodiment, a plurality of transfer rollers are provided in succession, as shown in the figure. In this example, the film formation unit comprises: a first transfer roller 42 that faces the supply roller 41; a second transfer roller 43 that faces the first transfer roller; and a third transfer roller 44 that faces the second transfer roller and faces the backup roller 45.

By being configured in this way, the gaps G1 to G4 between the rollers can be different sizes, and a suitable coating film can be formed while maintaining continuous pores in the moisture powder. This will now be explained in detail.

As shown in the figure, if the space between the supply roller 41 and the first transfer roller 42 is referred to as the first gap G1, the space between the first transfer roller 42 and the second transfer roller 43 is referred to as the second gap G2, the space between the second transfer roller 43 and the third transfer roller 44 is referred to as the third gap G3, and the space between the third transfer roller 44 and the backup roller 45 is referred to as the fourth gap G4, the sizes of the gaps are such that the first gap G1 is the largest, followed by the second gap G2, the third gap G3 and the fourth gap G4 in order (G1 > G2 > G3 > G4). By carrying out multi-stage roll-to-roll film formation in this way, in which the sizes of the gaps gradually decrease in the direction of transport (direction of progression) of the current collector 31, it is possible to form a coating film comprising the moisture powder 32 in a state in which continuous pores are appropriately maintained. That is, the film formation unit 40 in the present embodiment can be operated in the manner described below.

Because the supply roller 41, the first transfer roller 42, the second transfer roller 43, the third transfer roller 44 and the backup roller 45 are each connected to an independent driving apparatus (motor), which are not shown, each roller can be rotated at a different rotational speed. More specifically, the rotational speed of the first transfer roller 42 is faster than the rotational speed of the supply roller 41, the rotational speed of the second transfer roller 43 is faster than the rotational speed of the first transfer roller 42, the rotational speed of the third transfer roller 44 is faster than the rotational speed of the second transfer roller 43, and the rotational speed of the backup roller 45 is faster than the rotational speed of the third transfer roller 44.

By gradually increasing the rotational speed of the rollers in this way in the direction of transport (direction of progression) of the current collector between the rotating rollers, it is possible to carry out multistage roll-to-roll film formation that is different from that carried out using the roll-to-roll film formation apparatus 20 shown in FIG. 4. Here, by setting the first gap G1, the second gap G2, the third gap G3 and the fourth gap G4 to gradually decrease, as described above, it is possible to appropriately maintain continuous pores in the moisture powder 32 supplied to this film formation unit 40. Although not particularly limited, the sizes (widths) of the gaps G1 to G4 can all be set to fall within a range of approximately 10 to 100 µm.

An explanation will now be given of the coating film processing unit 50 in the electrode production apparatus 70 according to the present embodiment. As shown in FIG. 5, the coating film processing unit 50 is a unit for adjusting properties of the coating film 33 applied to the surface of the current collector 31 that has been transported from the film formation unit 40 and, in the present embodiment, comprises: pressing rollers 52 that adjust the density and film thickness of the coating film; and unevenness processing rollers 54 that form an uneven shape on the surface of the coating film.

The pressing rollers 52 comprise: a backup roller 52B, which supports the transported current collector 31 while sending out the current collector in the direction of progression; and a working roller 52A, which is disposed in a position that faces the backup roller 52B and presses and compresses the coating film 33 in the film thickness direction. The pressing rollers 52 can press and compress the coating film 33, which comprises the moisture powder 32 in a pendular or funicular state (and preferably a funicular I state) formed on the transported current collector 31, in such a way that isolated voids are not produced.

A suitable pressure to be applied by the pressing rollers 52 can vary according to the film thickness and density of a target coating film (electrode active material layer), and is therefore not particularly limited, but can generally be approximately 0.01 to 100 MPa, for example approximately 0.1 to 70 MPa.

The unevenness processing rollers 54 that are positioned downstream of the pressing rollers 52 in the direction of transport (direction of progression) of the current collector comprise a backup roller 54B, which supports the transported current collector 31 that has been transported from the pressing rollers 52 while sending out the current collector in the direction of progression; and a working roller 54A, which is disposed in a position that faces the backup roller 54B, presses and compresses the coating film 33 in the film thickness direction, and imparts the surface of the coating film with an uneven shape. That is, the unevenness processing rollers 54 function as second pressing rollers and continuously form an uneven pattern having a prescribed interval (pitch) and pattern on the surface of the coating film as a result of the pressure applied. Therefore, a corresponding uneven surface for forming an uneven surface having the prescribed interval (pitch) and pattern on the surface of the coating film is formed on the surface of the working roller 54A.

A suitable pressure to be applied by the unevenness processing rollers 54 can vary according to the density of the surface layer portion of a target coating film (electrode active material layer), the difference in elevation in an uneven pattern to be formed (the distance between the maximum peak height and the maximum trough depth; hereinafter defined in the same way), and the like, and is therefore not particularly limited, but can generally be approximately 1 to 150 MPa, for example approximately 5 to 100 MPa.

Because continuous pores connected to the outside are formed in the coating film 33 comprising the moisture powder 32 disclosed here, it is possible to compress the coating film without producing an excessive amount of isolated voids. In addition, because the coating film exhibits excellent spreadability, it is possible to form an uneven pattern having a desired difference in elevation and also maintain this pattern even in a moist state before the coating film is dried. FIGS. 6A to 6D are explanatory diagrams that schematically illustrate this feature.

That is, in the case of a coating film formed from a mixture slurry (a paste), it is difficult to form unevenness due to the surface tension of a solvent present at the coating film surface, as shown in FIG. 6A.

In addition, in the case of a coating film formed from a conventional moisture powder in a capillary state, because the amount of solvent at the coating film surface is relatively high, it is either impossible to form unevenness or it is only possible to form microscopic unevenness in which the difference in elevation in an uneven pattern is very small, as shown in FIG. 6B.

In addition, in a case in which a coating film formed from a mixture slurry (a paste) is dried and unevenness is formed on the dried coating film (that is, an electrode active material layer), even if a certain degree of unevenness is formed, a surface layer portion on which an uneven surface is formed is specifically compacted or there are concerns that cracking or partial dropout (detachment) will occur at the surface of the electrode active material layer on which the uneven surface has been formed, and forming sufficient unevenness is extremely difficult, as shown in FIG. 6D.

However, in a case where the coating film 33 is formed using the moisture powder 32 disclosed here, which is in a pendular or funicular state (and preferably a funicular I state), because the coating film exhibits excellent spreadability, it is possible to carry out unevenness formation on the surface of the coating film easily by means of pressing rollers even if the coating film is in a moist state before being dried, and it is possible to achieve the desired difference in elevation and form and maintain an uneven pattern, as shown in FIG. 6C.

In the apparatus shown, only one pair of unevenness processing rollers 54 is provided, but the present disclosure is not limited to this configuration, and it is possible to dispose multiple unevenness processing rollers in the direction of progression and constitute so that the pressures applied by these rollers are different from each other. By disposing multiple rollers in this way, it is possible to form a plurality of types of unevenness having different differences in elevation and patterns on the surface of the coating film 33 comprising the moisture powder 32.

As shown in FIG. 5, a drying chamber 62 comprising a heater (not shown) is disposed as a drying unit 60 further downstream in the direction of transport of the current collector than the coating film processing unit 50 of the electrode production apparatus 70 of the present embodiment, and this drying chamber dries the coating film 33 on the surface of the current collector 31 transported from the coating film processing unit 50. Moreover, this drying unit 60 may be similar to a drying unit used in a conventional electrode production apparatus and does not especially characterize the present disclosure, and further explanations of this drying unit will therefore be omitted.

A long sheet-shaped electrode for a lithium ion secondary battery is produced by drying the coating film 33 and then, if necessary, pressing the coating film at a pressure of approximately 50 to 200 MPa. A sheet-shaped electrode produced in this way can be used as a conventional sheet-shaped positive electrode or negative electrode to construct a lithium ion secondary battery.

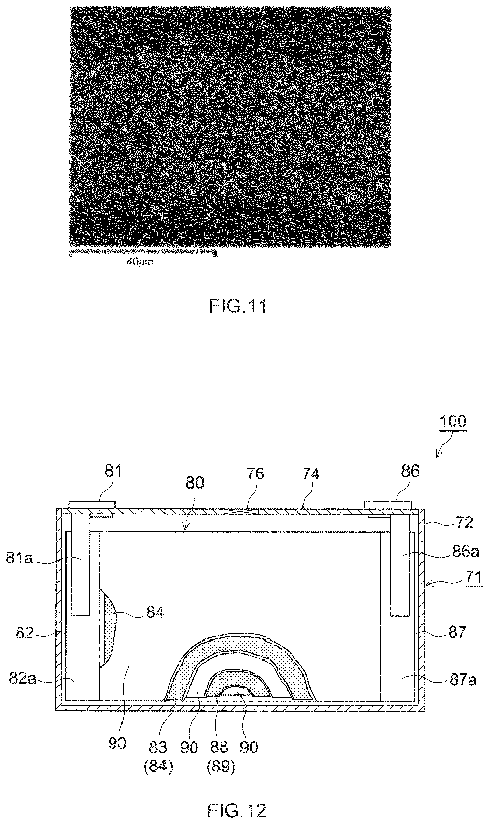

For example, FIG. 12 shows an example of a lithium ion secondary battery 100 able to be constructed using the sheet-shaped electrode of the present embodiment.

The lithium ion secondary battery (non-aqueous electrolyte secondary battery) 100 of the present embodiment is a battery in which a flat wound electrode body 80 and a non-aqueous electrolyte solution (not shown) are housed in a battery case 71 (that is, an outer container). The battery case 71 is constituted from a box-shaped (that is, a bottomed cuboid) case main body 72 having an opening on one side (corresponding to the top in a normal battery usage configuration) and a lid 74 that seals the opening on the case main body 72. Here, the wound electrode body 80 has a form in which the winding axis of the wound electrode body is turned sideways (that is, the direction of the winding axis of the wound electrode body 80 is approximately parallel to the surface direction of the lid 74), and is housed in the battery case 71 (the case main body 72). For example, a metal material which is lightweight and exhibits good thermal conductivity, such as aluminum, stainless steel or nickel-plated steel, can be advantageously used as the material of the battery case 71.

As shown in FIG. 12, a positive electrode terminal 81 for external connection and a negative electrode terminal 86 for external connection are provided on the lid 74. The lid 74 is provided with an exhaust valve 76, which is set to release pressure when the pressure inside the battery case 71 rises to a prescribed level or more, and an injection port (not shown) for injecting a non-aqueous electrolyte solution into the battery case 71. By welding the lid 74 to the periphery of the opening of the battery case main body 72 in the battery case 71, it is possible to join (tightly seal) the boundary between the battery case main body 72 and the lid 74.

The wound electrode body 80 is obtained by layering (overlaying) a positive electrode sheet 83, in which a positive electrode active material layer 84 is formed in the longitudinal direction on one surface or both surfaces of a long sheet-shaped positive electrode current collector 82 (typically made of aluminum), and a negative electrode sheet 88, in which a negative electrode active material layer 89 is formed in the longitudinal direction on one surface or both surfaces of a long sheet-shaped negative electrode current collector 87 (typically made of copper), with two long separator sheets 90 (typically comprising a porous polyolefin resin) interposed therebetween, and winding in the longitudinal direction.

The flat wound electrode body 80 can be formed into a flat shape by, for example, winding the positive electrode sheet 83 and the negative electrode sheet 88, in which an active material layer comprising the moisture powder 32 is formed using the electrode production apparatus 70 described above, and the long sheet-shaped separators 90 in such a way that the cross section forms a round cylindrical shape, and then squashing (pressing) the cylindrical wound body by pressing in a direction that is perpendicular to the winding axis (typically from the sides). By forming this flat shape, the flat wound electrode body can be advantageously housed in the box-shaped (bottomed cuboid) battery case 71. For example, a method comprising winding the positive and negative electrodes and the separators around the periphery of the cylindrical winding axis can be advantageously used as the winding method.

Although not particularly limited, the wound electrode body 80 can be obtained by overlaying so that a positive electrode active material layer-non-forming part 82a (that is, a part in which the positive electrode active material layer 84 is not formed and the positive electrode current collector 82 is exposed) and a negative electrode active material layer-non-forming part 87a (that is, a part in which the negative electrode active material layer 89 is not formed and the negative electrode current collector 87 is exposed) protrude outwards from both edges in the direction of the winding axis, and then winding. As a result, a winding core, which is formed by layering and winding the positive electrode sheet 83, the negative electrode sheet 88 and the separators 90, is formed in the central part of the wound electrode body 80 in the direction of the winding axis. In addition, in the positive electrode sheet 83 and the negative electrode sheet 88, the positive electrode active material layer-non-forming part 82a and the positive electrode terminal 81 (typically made of aluminum) are electrically connected via a positive electrode current collector plate 81a, and the negative electrode active material layer-non-forming part 87a and the negative electrode terminal 86 (typically made of copper or nickel) are electrically connected via a negative electrode current collector plate 86a. Moreover, the positive and negative electrode current collector plates 81a, 86a and the positive and negative electrode active material layer-non-forming parts 82a, 87a can be joined by means of, for example, ultrasonic welding, resistance welding, or the like.

Typically, an electrolyte solution obtained by incorporating a supporting electrolyte in an appropriate non-aqueous solvent (typically an organic solvent) can be used as the non-aqueous electrolyte solution. For example, a non-aqueous electrolyte solution that is a liquid at normal temperature can be advantageously used. A variety of organic solvents used in ordinary non-aqueous electrolyte secondary batteries can be used without particular limitation as the non-aqueous solvent. For example, aprotic solvents such as carbonate compounds, ether compounds, ester compounds, nitrile compounds, sulfone compounds and lactone compounds can be used without particular limitation. A lithium salt such as LiPF₆ can be advantageously used as the supporting electrolyte. The concentration of the supporting electrolyte is not particularly limited, but can be, for example, 0.1 to 2 mol/L.

Moreover, it is not necessary to limit the electrode body to a wound electrode body 80 such as that shown in the figure in order to implement features disclosed here. For example, a lithium ion secondary battery provided with a layered electrode body formed by layering a plurality of positive electrode sheets and negative electrode sheets, with separators interposed therebetween, is possible. In addition, as is clear from technical information disclosed in the present specification, the shape of the battery is not limited to the square shape mentioned above. In addition, the embodiments described above are explained using a non-aqueous electrolyte lithium ion secondary battery, in which an electrolyte is a non-aqueous electrolyte solution, as an example, but the present disclosure is not limited to these embodiments, and the features disclosed here can also be applied to a so-called all solid state battery in which a solid electrolyte is used instead of an electrolyte solution. In such a case, the moisture powder in a pendular or funicular state is configured so as to contain a solid electrolyte as a solid component in addition to an active material.

A battery assembly, in which a case to which a non-aqueous electrolyte solution is supplied and which houses an electrode body is sealed, is generally subjected to an initial charging step. In the same way as with a conventional lithium ion secondary battery, an external power source is connected to the battery assembly between positive and negative electrode terminals for external connection, and initial charging is carried out at normal temperature (typically approximately 25°C) until the voltage between the positive and negative electrode terminals reaches a prescribed value. For example, it is possible to carry out initial charging at a constant current of approximately 0.1 to 10 C from the start of charging until the voltage between the terminals reaches a prescribed value (for example, 4.3 to 4.8 V), and then carry out constant current constant voltage charging (CC-CV charging) in which charging is carried out at a constant voltage until the SOC (State of Charge) reaches approximately 60 to 100%.

By subsequently carrying out an aging treatment, it is possible to provide a lithium ion secondary battery 100 that can exhibit good performance. The aging treatment is carried out by means of high temperature aging in which the battery 100 that has been subjected to the initial charging is held in a high temperature region at a temperature of 35°C or higher for a period of 6 hours or longer (and preferably 10 hours or longer, such as 20 hours or longer). By configuring in this way, it is possible to increase the stability of a SEI (Solid Electrolyte Interphase) film, which can occur at the surface of the negative electrode at the time of initial charging, and lower the internal resistance. In addition, it is possible to increase the durability of a lithium ion secondary battery against high temperature storage. The aging temperature is preferably approximately 35 to 85°C (more preferably 40 to 80°C, and further preferably 50 to 70°C). If the aging temperature is lower than the range mentioned above, the advantageous effect of lowering initial internal resistance may not be sufficient. If the aging temperature is higher than the range mentioned above, the electrolyte solution may degrade due to, for example, a non-aqueous solvent or a lithium salt degrading, and internal resistance may increase. The upper limit of the aging time is not particularly limited, but if the aging time exceeds approximately 50 hours, a decrease in initial internal resistance is significantly slower, and there may be almost no change in resistance. Therefore, from the perspective of cost reduction, the aging time is preferably approximately 6 to 50 hours (and more preferably 10 to 40 hours, for example 20 to 30 hours).

Several test examples will now be explained for cases in which the gas phase-controlled moisture powder having a pendular or funicular state disclosed here is used as an electrode mixture, but these examples in no way limit the features disclosed here to these specific examples.

### Test Example 1: Production of Negative Electrode

A gas phase-controlled moisture powder able to be advantageously used as a negative electrode mixture was first produced, and a negative electrode active material layer was then formed on a copper foil using the produced moisture powder (negative electrode mixture).

In the present test example, a graphite powder having an average particle diameter (D₅₀) of 10 µm, as measured using a laser diffraction scattering method, was used as a negative electrode active material, a styrene-butadiene rubber (SBR) was used as a binder resin, carboxymethyl cellulose (CMC) was used as a thickening agent, and water was used as a solvent.

First, solid components comprising 95 parts by mass of the graphite powder, 1 part by mass of CMC and 1 part by mass of SBR were placed in a stirring granulator (a planetary mixer or high speed mixer) having a rotating blade, such as that shown in FIG. 2, and subjected to a mixing and stirring treatment.

Specifically, the rotational speed of the rotating blade of the stirring granulator was set to 4500 rpm and a stirring and dispersing treatment was carried out for 15 seconds, thereby obtaining a powder material mixture comprising the solid components mentioned above. Water was added as a solvent to the obtained mixture so as to attain a solids content of 90 mass%, a stirring, mixing and combining treatment was carried out at 300 rpm for 30 seconds, and a stirring and refining treatment was then continued for 2 seconds at a rotational speed of 1000 rpm. A moisture powder (negative electrode mixture) of the present test example was produced in this way.

The ratio of the loose bulk specific gravity X and the true specific gravity Y (Y/X) of the obtained moisture powder was calculated and found to be 1.2 or more, and a gas phase-rich gas phase-controlled moisture powder (negative electrode mixture) having a pendular state or a funicular I state, that is, comprising continuous voids that were not isolated voids, was produced.

Next, the thus obtained gas phase-controlled moisture powder (negative electrode mixture) was supplied to the film formation unit 40 of the electrode production apparatus 70 (see FIG. 5), and the coating film was transferred to a surface of a separately prepared negative electrode current collector comprising a copper foil.

The coating film-equipped negative electrode current collector was then transported to the coating film processing unit, pressed at a pressure of approximately 60 MPa using pressing rollers, and then heated and dried using the drying unit. An electrode (a negative electrode) in which the negative electrode active material layer comprising the gas phase-controlled moisture powder was formed on the negative electrode current collector was obtained in this way.

The state of the thus obtained negative electrode active material layer prior to drying was observed using a SEM.

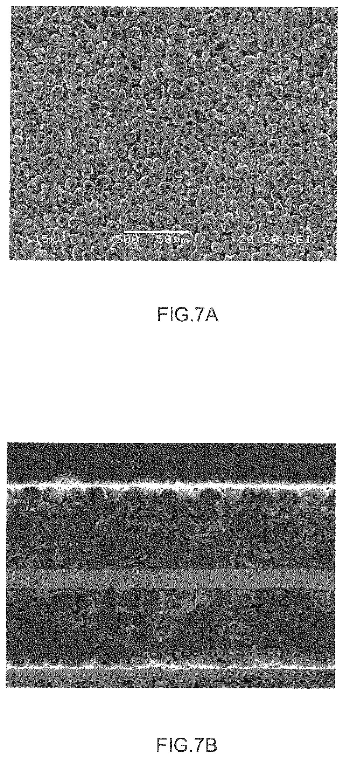

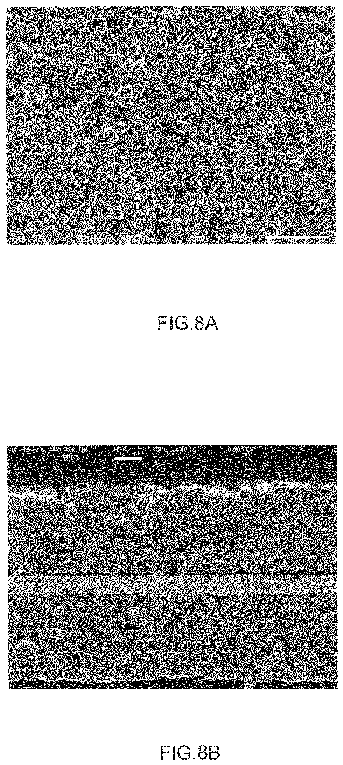

Moreover, as a comparison, a negative electrode active material layer was formed by producing a conventional solvent-rich moisture powder in a capillary state, in which the ratio of the loose bulk specific gravity X and the true specific gravity Y (Y/X) was approximately 1.05, and then coating the moisture powder on a negative electrode current collector, and the state of this negative electrode active material layer prior to drying was similarly observed with a SEM. The results are shown in FIGS. 7A to 8B. FIGS. 7A and 7B are a surface SEM image and a cross section SEM image, respectively, that illustrate the structure of a negative electrode active material layer formed using a conventional solvent-rich moisture powder. FIGS. 8A and 8B are a surface SEM image and a cross section SEM image, respectively, that illustrate the structure of a negative electrode active material layer formed using a gas phase-controlled moisture powder in which the ratio Y/X is 1.2 or more.

As is clear from the SEM images in FIGS. 7A and 7B, a large amount of solvent (water in this case) is present in the negative electrode active material and at the surface of the negative electrode active material layer in the undried negative electrode active material layer formed from a conventional solvent-rich moisture powder. Therefore, the average surface area, as determined by defining a standard area represented by L cm × B cm (L and B are each an integer of 3 or more) on the surface of the negative electrode active material layer and measuring at a number n (n is an integer of 5 or more) points, is approximately L × B cm², and it is difficult to form an uneven surface that can achieve an average surface area of 1.05 × L × B cm² or more on the surface of the negative electrode active material layer.

As is clear from the SEM images in FIGS. 8A and 8B, however, an excessive amount of solvent was not present at the surface of aggregated particles that constitute the powder in the negative electrode active material layer formed from the gas phase-controlled moisture powder. Therefore, the surface of the negative electrode active material layer formed from the gas phase-controlled moisture powder is constituted from an ultrafine uneven surface, and there is no layer comprising a solvent that covers the entire surface, as is well shown in FIG. 8B in particular. This ultrafine uneven surface contributes to an increase in the surface area of the negative electrode active material layer, the average surface area, as determined by defining a standard area represented by L cm × B cm (L and B are each an integer of 3 or more) on the surface of the active material layer and measuring at a number n (n is an integer of 5 or more) points, is preferably approximately L × B cm², and it is possible to achieve an average surface area of 1.05 × L × B cm² or more.

Next, the void structure of the obtained negative electrode active material layer after being pressed at 60 MPa (but before being dried) was investigated using a Synchrotron X-Ray laminography method.

A Synchrotron X-Ray laminography method can be used on samples having thicknesses of 1.2 mm or less and can achieve a sufficient X-Ray transmission strength, and it is therefore possible to observe the manner in which voids are present in the inner part of the sample without destroying the sample.

This test was carried out using the Toyota beamline (BL33XU; installed by Toyota Central R&D Labs., Inc) installed at "SPring-8", which is a large synchrotron radiation facility. That is, an active material layer sample whose mass had been measured in advance was housed in a cylindrical cell capable of housing a sample in a state that is compressible in the cylindrical direction at a prescribed pressure using a compressing tool. This cell was disposed on the optical axis between an X-Ray emission port and a scintillator.

Next, X-Rays having an energy of 29 eV were emitted, and X-Ray transmission images that passed through the sample in the cell were converted into visible light by the scintillator and captured by a CCD camera as visible light images. The X-Ray transmission images (images after conversion to visible light) were captured at intervals of 0.1° while rotating the cell containing the sample 360°.

A three-dimensional image was obtained by reconstructing the thus obtained 3601 X-Ray transmission images (images after conversion to visible light).

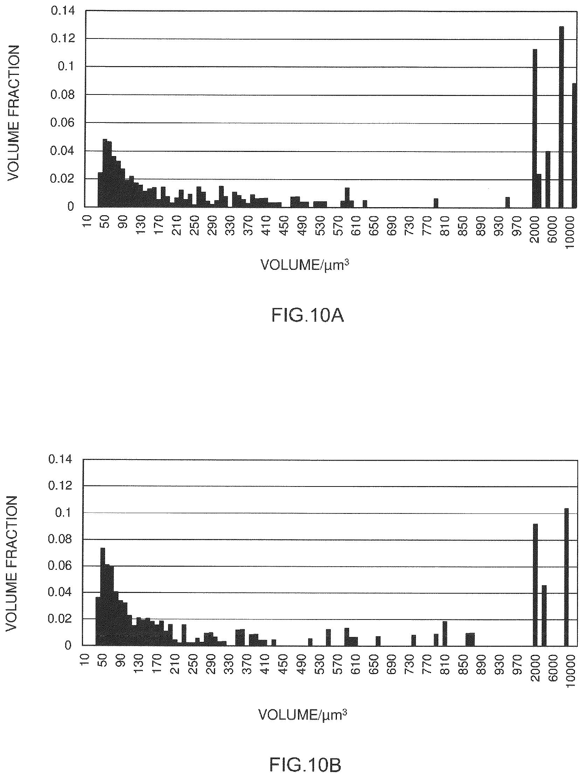

Void observation results are shown in FIG. 10A and FIG. 10B. FIG. 10A shows results for a negative electrode active material layer formed from a conventional solvent-rich moisture powder before being dried, and FIG. 10B shows results for a negative electrode active material layer formed from the gas phase-controlled moisture powder before being dried.

As shown in the figures, linked void paths were not observed and isolated voids (white parts) were observed in some places in the negative electrode active material layer formed from a conventional solvent-rich moisture powder.

However, large isolated voids were not observed in the dried negative electrode active material layer formed from the gas phase-controlled moisture powder disclosed here, but linked void paths that connected the inner and outer parts of the active material layer were observed throughout the active material layer.

Residual gas rate (%) was also measured. Specifically, residual gas rate (%) was determined from (volume of air/volume of coating film (that is, volume of active material layer before drying)) × 100. Here, the volume of air is calculated by subtracting (mass of solvent/density of solvent), (mass of active material/density of active material) and "mass of solid components/density of solid components) for contained solid components other than active material from the volume of the coating film.

As a result, the residual gas ratio was approximately 15% for the undried negative electrode active material layer formed from a conventional solvent-rich moisture powder shown in FIG. 10A. However, the residual gas ratio was approximately 6% for the undried negative electrode active material layer formed from the gas phase-controlled moisture powder shown in FIG. 10B.

This shows that many voids remained in the active material layer after pressing in the negative electrode active material layer formed from a conventional solvent-rich moisture powder because linked void paths were not observed and many isolated voids (white parts) were observed, but that the residual gas rate could be significantly lowered by pressing in the case of the negative electrode active material layer formed from the gas phase-controlled moisture powder because linked void paths that connect the inner and outer parts of the active material layer are present throughout the active material layer.

Next, void distribution was investigated through three-dimensional analysis of the three-dimensional image observed using a Synchrotron X-Ray laminography method. Specifically, assuming that the volume of the sample is the same as the volume of the internal space in the cylindrical cell, the macroporosity (E) was determined using the radii (R) of the upper and lower surfaces of the cell, the distance (H) between the upper and lower surfaces, the mass (M) of the sample, and the density (ρ₀) of the sample assuming a porosity of 0 (E = 1 - M/(πR²Hρ₀)).

In addition, the obtained three-dimensional image was binarized using a plurality of different threshold values (t₁, t₂, t₃, ...), the porosity was calculated for all cross-sectional images of the sample, and the average value thereof (Ev) was determined. Next, changes in porosity (Ev) were fitted in a linear manner against a binarization threshold value (t_{b}) (Ev = at_{b} + b; a and b are fitting parameters), and the threshold value (t_{b}) that matched the macroporosity (E) was taken to be the binarization threshold value for this example.

The thus obtained binarized stacked image was imported using ImageJFiji, which is well known as free image analysis software, and the "3D Object Counter" plug-in was run. Next, "volume" was selected from "Parameters to calculate", "Objects" was selected from "Maps to show), and the volume of each void, considered as a single void mass by three-dimensional contact determination, was obtained together with a mapping image (stacked image) thereof.

Next, volumes of voids were classified at prescribed intervals for volumes within the range 0 to 10,000 µm³ and for volumes exceeding 10,000 µm³, and the average volume fraction for each classified interval was determined, with the total volume taken to be 1. Graphs showing the results are shown in FIG. 10A and FIG. 10B. FIG. 10A shows results for a negative electrode active material layer formed using a conventional solvent-rich moisture powder, and FIG. 10B shows results for a negative electrode active material layer formed using the gas phase-controlled moisture powder.

As is clear from a comparison between FIG. 10A and FIG. 10B, in void distributions calculated on the basis of void observations using a Synchrotron X-Ray laminography method, the volume fraction of voids having volumes of 2000 µm³ or more relative to the total void volume was 0.3 or less for the negative electrode active material layer formed using the gas phase-controlled moisture powder, that is, it was confirmed that the proportion of voids having volumes of 2000 µm³ or more was 30 vol% or less relative to the total void volume (100 vol%). This shows that relatively large isolated voids were hardly formed in the active material layer.

However, the volume fraction of voids having volumes of 2000 µm³ or more relative to the total void volume was more than 0.3 for the negative electrode active material layer formed using a conventional solvent-rich moisture powder, that is, it was confirmed that the proportion of voids having volumes of 2000 µm³ or more was more than 30 vol% relative to the total void volume (100 vol%). This shows that relatively large isolated voids were readily formed as a result of excess solvent in the negative electrode active material layer formed using a conventional solvent-rich moisture powder.

### Test Example 2: Production of Positive Electrode

A gas phase-controlled moisture powder able to be advantageously used as a positive electrode mixture was first produced, and a positive electrode active material layer was then formed on an aluminum foil using the produced moisture powder (positive electrode mixture).

In the present test example, a lithium-transition metal oxide (LiNi_{1/3}Co_{1/3}Mn_{1/3}O₂) having an average particle diameter (D₅₀) of 20 µm, as measured using a laser diffraction·scattering method, was used as a positive electrode active material, poly(vinylidene fluoride) (PVDF) was used as a binder resin, acetylene black was used as an electrically conductive material, and NMP was used as a non-aqueous solvent.

First, solid components comprising 90 parts by mass of the positive electrode active material, 2 parts by mass of PVDF and 8 parts by mass of acetylene black were placed in a stirring granulator (a planetary mixer) having a rotating blade, such as that shown in FIG. 2, and subjected to a mixing and stirring treatment.

Specifically, the rotational speed of the rotating blade of the stirring granulator was set to 4,500 rpm and the stirring treatment was carried out for 15 seconds, thereby obtaining a powder material mixture comprising the solid components mentioned above. NMP was added as a solvent to the obtained mixture so as to attain a solids content of 90 mass% or more, stirring was carried out at a rotational speed of 300 rpm for 30 seconds, and stirring was then continued for 2 seconds at a rotational speed of 4500 rpm. A moisture powder (positive electrode mixture) of the present test example was produced in this way.

The ratio of the loose bulk specific gravity X and the true specific gravity Y (Y/X) of the obtained moisture powder was calculated and found to be 1.3 or more, and a gas phase-rich gas phase-controlled moisture powder (positive electrode mixture) having a pendular state or a funicular I state, that is, comprising continuous voids that were not isolated voids, was produced.

Next, the thus obtained gas phase-controlled moisture powder (positive electrode mixture) was supplied to the film formation unit 40 of the electrode production apparatus 70 (see FIG. 5), and the coating film was transferred to a surface of a separately prepared positive electrode current collector comprising an aluminum foil. In this test example, two similar film formation units were prepared and a coating film was formed on both surfaces of the positive electrode current collector.

The coating film-equipped positive electrode current collector was then transported to the coating film processing unit, pressed at a pressure of approximately 60 MPa using pressing rollers, and then heated and dried using the drying unit. An electrode (a positive electrode) in which the positive electrode active material layer comprising the gas phase-controlled moisture powder was formed on the positive electrode current collector was obtained in this way.

Distribution of the binder resin (PVDF) present in the obtained positive electrode active material layer after drying was investigated by carrying out ordinary SEM-EDX and fluorine (F) mapping.

The results are shown in FIG. 11. FIG. 11 is a cross section SEM-EDX image of a positive electrode active material layer, as obtained using F mapping, in the present test example. Bright spots show positions at which F atoms are present (that is, positions at which PVDF is present). As is clear from this SEM image, in a positive electrode active material layer produced using a positive electrode mixture comprising the gas phase-controlled moisture powder, when the positive electrode active material layer was divided equally into an upper layer and a lower layer in the thickness direction from the surface of the active material layer towards the current collector and the concentration values (mg/L) of the binder resin (PVDF in this case) in the upper layer and lower layer were denoted by C1 and C2 respectively, it was confirmed that the relationship 0.8 ≤ (C1/C2) ≤ 1.2 was satisfied (in this test example the value of C1/C2 was approximately 1.1).

## Claims

1. A moisture powder (32) for forming an electrode active material layer on an electrode current collector of either a positive electrode (83) or a negative electrode (88),
the moisture powder (32) being constituted from aggregated particles (1) that contain a plurality of electrode active material particles (2), a binder resin and a solvent (3), wherein
at least 50% by number or more of the aggregated particles (1) that constitute the moisture powder (32) have the following properties:
(1) a solid phase (2), a liquid phase (3) and a gas phase (4) form a pendular state or a funicular state; and
(2) a layer of the solvent (3) is not observed at the outer surface of the aggregated particle (1) in electron microscope observations,

2. The moisture powder (32) for forming an electrode active material layer according to claim 1, wherein
if the bulk specific gravity measured by placing an amount (g) of the moisture powder (32) in a container having a prescribed volume (mL) and then leveling the moisture powder (32) without applying a force is referred to as the loose bulk specific gravity X (g/mL), and
the specific gravity calculated from the composition of the moisture powder (32) on the assumption that no gas phase (4) is present is referred to as the true specific gravity Y (g/mL), then
the ratio of the loose bulk specific gravity X and the true specific gravity Y (Y/X) is 1.2 or more.

3. The moisture powder (32) for forming an electrode active material layer according to claim 1 or claim 2, wherein
when a coating film (33) having a thickness of 300 µm or more to 1000 µm or less is formed from the moisture powder (32) on the current collector (31) and then pressed at a pressure of 60 MPa, the residual gas rate in the coating film (33) ((volume of air/volume of coating film) × 100) after the coating film is pressed is 10 vol% or less.

4. The moisture powder (32) for forming an electrode active material layer according to claim 3, wherein
in a void distribution of the pressed coating film (33) based on void observations determined using a Synchrotron X-Ray laminography method, the ratio of voids having volumes of 2000 µm³ or more relative to the total void volume (100 vol%) is 30 vol% or less.

5. An electrode which is either a positive electrode (83) or a negative electrode (88) of a secondary battery (100), comprising:
an electrode current collector and an electrode active material layer formed on the electrode current collector, wherein
when the surface area of a reference area of the electrode active material layer indicated by L cm × B cm (L and B are integers of 3 or higher) is measured at n (n is an integer of 5 or higher) different points, the average surface area is 1.05 × L × B cm² or more.

6. The electrode according to claim 5, wherein
the residual gas rate in the electrode active material layer ((volume of air/volume of coating film) × 100) is 10 vol% or less.

7. The electrode according to claim 6, wherein in a void distribution of the electrode active material layer based on void observations determined using a Synchrotron X-Ray laminography method, the ratio of voids having volumes of 2000 µm³ or more relative to the total void volume (100 vol%) is 30 vol% or less.

8. The electrode according to any one of claims 5 to 7, wherein
if the electrode active material layer is divided equally into an upper layer and a lower layer in the thickness direction from the surface of the active material layer towards the current collector, and the concentration values (mg/L) of the binder resin in the upper layer and lower layer are denoted by C1 and C2 respectively,
the relationship 0.8 ≤ (C1/C2) ≤ 1.2 is satisfied.

9. A method for producing an electrode that is either a positive electrode (83) or negative electrode (88) having an electrode current collector and an electrode active material layer, the method including the following steps:
a step (S1) for preparing a moisture powder (32),
the moisture powder (32) being constituted from aggregated particles (1) that contain a plurality of electrode active material particles (2), a binder resin and a solvent (3), wherein at least 50% by number or more of the aggregated particle (1)s that constitute the moisture powder (32) have the following properties:
(1) a solid phase (2), a liquid phase (3) and a gas phase (4) form a pendular state or a funicular state; and
(2) a layer of the solvent (3) is not observed at the outer surface of the aggregated particle (1) in electron microscope observations,
a step (S2) for coating the moisture powder (32) on the current collector (31) so as to form a coating film (33) comprising the moisture powder (32); and
a step (S3) for subjecting the surface of the coating film (33) to an unevenness-forming treatment so as to form an electrode active material layer on the surface of which is formed unevenness having a prescribed pattern.

10. The method for forming an electrode according to claim 9, wherein the unevenness-forming treatment is carried out in such a way as to form an uneven surface in which, when the surface area of a reference area of the electrode active material layer indicated by L cm × B cm (L and B are integers of 3 or higher) is measured at n (n is an integer of 5 or higher) different points, the average surface area is 1.05 × L × B cm² or more.

11. The method for forming an electrode according to claim 9 or claim 10, wherein the coating film formation step (S2) is carried out by
supplying the moisture (32) powder between a pair of rotating rollers (21,22) so as to form a coating film (33) comprising the moisture powder (32) on the surface of one of the rollers, and
transferring the coating film (33) to the surface of the current collector (31) which has been transported on the other rotating roller (23).

12. The method for forming an electrode according to claim 11, wherein
the unevenness-forming treatment
is carried out by pushing a rotating roller (54), on the surface of which a prescribed uneven pattern has been formed, against the surface of the coating film (33) on the current collector (31) having the coating film (33).

13. A secondary battery (100) provided with a positive electrode (83) and a negative electrode (88), wherein
the electrode according to any one of claims 5 to 8 is provided as at least one of the positive electrode (83) and negative electrode (88).
